# EUROPÄISCHE PATENTSCHRIFT

(11) **EP 0 608 290 B1**
(45) Veröffentlichungstag und Bekanntmachung des Hinweises auf die Patenterteilung: **10.04.1996**
(21) Anmeldenummer: 92921157.1
(22) Anmeldetag: 15.10.1992
(51) Int. Cl.: H02H 3/44, H02H 7/12, B23K 11/25

(54) **VERFAHREN UND VORRICHTUNG ZUR VERMEIDUNG ÜBERGROSSER STRÖME IN EINEM SCHWEISSUMRICHTER**
METHOD AND DEVICE FOR AVOIDING OVERCURRENTS IN A WELDING CONVERTER
PROCEDE ET DISPOSITIF VISANT A EVITER LES SURINTENSITES DANS UN CONVERTISSEUR DE FREQUENCE DE SOUDAGE

(30) Priorität: 18.10.1991 DE 4134461
(43) Veröffentlichungstag der Anmeldung: 03.08.1994
(73) Patentinhaber: ROBERT BOSCH GMBH, D-70442 Stuttgart (DE)
(72) Erfinder: SPILGER, Gerhard, D-6124 Beerfelden (DE); KLINGER, Thomas, D-6129 Luetzelbach (DE); STELLWAG, Dieter, D-6120 Erbach (DE)
(86) Internationale Anmeldenummer: DE9200862
(87) Internationale Veröffentlichungsnummer: WO9308628

(56) Entgegenhaltungen:
- EP-A- 0 237 861
- EP-A- 0 244 284
- DE-A- 3 929 236
- DE-C- 4 009 483
- FR-A- 2 638 992

## Beschreibung

### Stand der Technik

Die Erfindung geht aus von einem Verfahren nach der Gattung des Hauptanspruchs, wie es bei einer handelsüblichen Schweißmaschine bekannt ist, bei der eine Uberwachung zur Vermeidung eines übergroßen Stromes vorgesehen ist. Bei dieser Anordung erfolgt ferner eine Korrektur der Magnetisierung des Schweißtransformators durch das Steuersystem. Die Stromüberwachung erfolgt von der Sekundärseite des Schweißtransformators aus. Fehler im Primärkreis werden dadurch unter Umständen verfälscht oder zu spät erkannt, was eine Beschädigung der Leistungshalbleiter des Umrichters zur Folge haben kann.

Es ist Aufgabe der Erfindung, ein Verfahren sowie eine zugehörige Anordnung anzugeben, welche einen gegenüber dem Stand der Technik verbesserten Schutz der Leistungshalbleiter gegen übergroße Ströme gestattet.Es ist eine weitere Aufgabe der Erfindung, eine Anordnung anzugeben, die es gestattet, bei Auftreten eines Überstromes im Primärkeis das Auffinden der Fehlerursache zu vereinfachen.

### Vorteile der Erfindung

Die Aufgabe wird erfindungsgemäß gelöst durch ein Verfahren und eine Anordnung mit den kennzeichnenden Merkmalen der Ansprüche 1 und 7. Die Anordnung spricht auf einen Überstrom innerhalb einer so kurzen zeit an, daß ein Schutz der Leistungshalbleiter gegen Zerstörung gewährleistet ist. Diese sehr schnelle Ansprechzeit gewährleistet einen Schutz der Leistungshalbleiter auch im Falle eines Kurzschlusses im Primärkreis. Die technische Realisierung der zur Durchführung des vorgeschlagenen Überwachungsverfahrens erfolgt mittels Standardbauelementen sowie Standard-Schaltkreisen und wird von jedem Fachmann leicht vorgenommen. Vorteilhaft können Teile der einzelnen Überwachungsfunktionen unter Zuhilfenahme von Softwarelösungen realisiert sein

In vorteilhafter Weise werden beide Phasen des Primärstroms einzeln überwacht.Durch kontinuierlichen Vergleich des Stromverhaltens in beiden Phasen ergibt sich ein wirksamer Schutz der Leistungshalbleiter im Falle eines Erdschlusses, sowie eine Möglichkeit, die Fehlerursache leicht aufzufinden.

In einer anderen vorteilhaften Weiterbildung gestattet die erfindungsgemäße Anordnung die Vermeidung einer Sättigungsmagnetisierung des Transformators. Dadurch wird eine über die gesamte Schweißdauer gleichbleibende Schweißleistung sichergestellt, was wiederum der Qualität der Schweißung zugute kommt. Zu große Primärströme werden ebenso wie eine zu hohe Erwärmung des Transformators vermieden. Das Eisenvolumen des Transformators kann dadurch minimal gehalten werden.

Ein Ausführungsbeispiel der Anordnung ist in der Zeichnung dargestellt und daran anschließend näher beschrieben.

### Zeichnung

Es zeigen Figur 1 eine Prinzipdarstellung eines erfindungsgemäß aufgebauten Schweißumrichters, Figur 2 die Wirkung der Sättigungserkennung dargestellt in einem Strom-Zeit-Diagramm und Figur 3 ein Strukturbild einer erweiterten Sättigungserkennung.

### Beschreibung des Ausführungsbeispiels

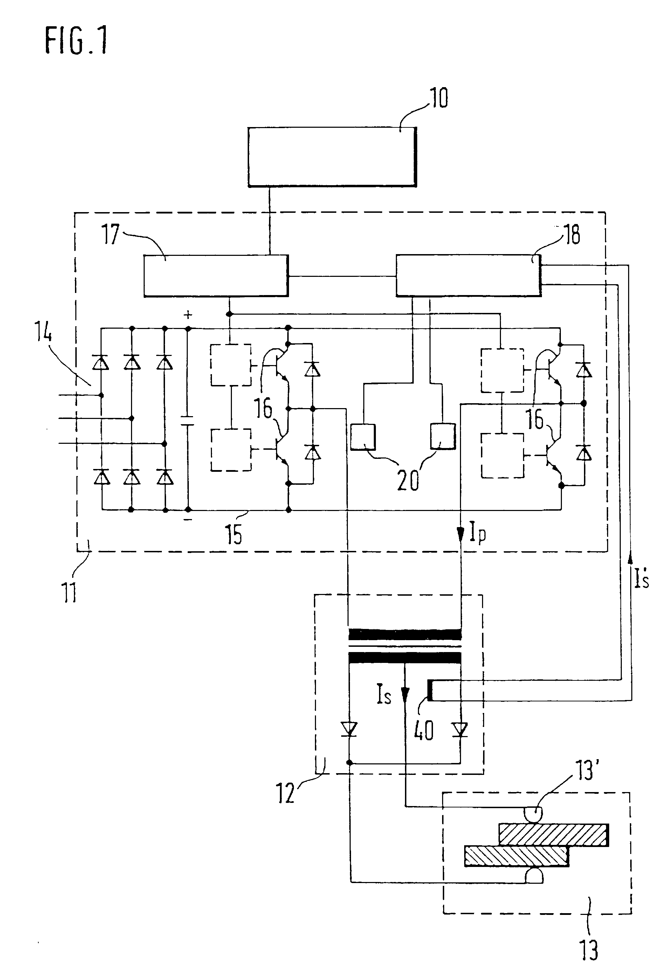

Figur 1 zeigt das Prinzipschaltbild einer Mittelfrequenz-Wider-standsschweißanlage, wie sie der Erfindung zugrundeliegt. Hauptbestandteile der Anlage sind eine Steuereinrichtung 10, eine Umrichter-Leistungsstufe 11, ein Schweißtransformator 12 sowie eine Schweißvorrichtung 13. Anlagen der dargestellten Art sind seit längerem bekannt, beispielsweise von der Fa. Miyachi in Form der Schweißmaschine IS-440B.

Die Anlage arbeitet nach folgendem Funktionsprinzip:

Dreiphasiger 50/60 Hz-Netzwechselstrom wird in einer Gleichrichtereinheit 14, deren Ausgangsseite einen Gleichspannungszwischenkreis 15 bildet, gleichgerichtet. Der Gleichspannungszwischenkreis 15 speist ein zur Erzeugung des pulsweitenmodulierten Wechselstromes dienendes Leistungsteil. Hauptbestandteile des Leistungsteils sind 4 in H-Erückenschaltung angeordnete Leistungshalbleiter 16, welche entsprechend der gewünschten Frequenz wechselweise von der Regeleinheit 17 angesteuert werden. Im Leistungsteil entsteht aus dem Zwischenkreisgleichstrom ein pulsweitenmodulierter Wechselstrom Ip, welcher der Primärseite des Schweißtransformators 12 zugeführt wird. Seine Frequenz liegt vorzugsweise in einem Bereich zwischen 0,5 und 5 kHz. Der sekundärseitig am Schweißtransformators 12 anliegende Wechselstrom Is wird wiederum gleichgerichtet und der Schweißvorrichtung 13 mit Schweißelektroden 13' zugeführt.

Am Primärkreis angeordnete Meßfühler 20 erfassen kontinuierlich die Größe des Primärstromes Ip und liefern die gemessenen Ist-Stromwerte über eine vorgeschaltete Überwachungseinrichtung 18 an die Regeleinheit 17.

An der Sekundärseite des Schweißtransformators 12 erfolgt mittels einer Spule 40 die Erfassung des Schweißstromes Is, die Meßwerte Is werden ebenfalls über die Überwachungseinrichtung 18 der Regeleinheit 17 zugeführt. Sollwerte für Stromsstärke und Stromzeit erhält die Regeleinheit 17 von der Steuereinheit 10.

Das schnelle Erkennen eines Kurzschlusses im Primärkreis erfolgt erfindungsgemäß mit einer direkt am Primärkreis angeordneten Stromüberwachungsvorrichtung. Dabei wird von dem Umstand Gebrauch gemacht, daß bei Vorliegen eines Kurzschlusses im Primärkreis ein stark überhöhter Stromanstieg des Primärstromes Ip eintritt, weil die einem Stromanstieg entgegenwirkende Transformatorinduktivität wegfällt. Um einen solchen Anstieg schnell erkennen zu können, ist es vorteilhaft, das Zeitverhalten dIp/dt des Stromes zu betrachten. Wenigstens einer, im Hinblick auf weitere Verwendungsmöglichkeiten aber vorteilhaft beiden Phasen-Leitungen des pulsweitenmodulierten Stromsignales ist ein Meßfühler 20 zugeordnet, der für die betreffende Phase des pulsweitenmodulieten Wechselstroms das aktuelle Zeitverhalten dIp/dt des Stromes erfaßt. Als Meßfühler 20 besonders geeignet sind Toroid-Spulen, welche nicht den Absolutwert des Stromes, sondern unmittelbar dessen zeitliche Anderung dI/dt erfassen. Sie sind zudem sehr platzsparend. Für die Kurzschlußüberwachung wird nur eines der Ausgangssignale der Meßfühler 20 benötigt. Das entsprechende Ausgangssignal wird der Überwachungseinrichtung 18 zugeführt. In dieser wird es mit einem Maximalwert verglichen, der die höchstzulässige Stromänderung in einem vorgegebenen festen Zeitintervall angibt. In einfacher Weise ist die Überwachungseinrichtung 18 als Komparator ausgeführt. Bei Auftritt eines Kurzschlusses im Schweißkreis würde der Maximalwert um ein Vielfaches überschritten.

Übersteigt die zeitliche Änderung des gemessenen Stromes dlp/dt den vorgegebenen Maximalwert, gibt der Komparator ein Fehlersignal an die Regeleinheit 17 ab. Die Leistungshalbleiter 16 werden daraufhin sofort gesperrt, so daß sie keinen Schaden nehmen können. Die Abschaltung bei Kurzschluß erfolgt sehr schnell, erreichbar sind Zeiten von kleiner als 12 Mikrosekunden. Zusätzlich gibt die Überwachungsschaltung 18 ein Signal an die Steuerung 10 ab, aufgrund dessen die Fehlermeldung "Kurzschluß im Primärkreis" zur Anzeige gebracht wird.

Für die Realisierung weiterer Uberwachungsfenktionen wird als Eingangssignal die absolute Größe des Primärstromes Ip benötigt. Deshalb werden die von den Meßfühlern 20 abgegebenen Signale zusätzlich nicht dargestellten Integrationsgliedern zugeführt, welche die eine zeitliche Änderung repräsentierenden Signale durch Integration in absolute Signale überführen. Die Integrationsglieder sind zweckmäßig ebenfalls in der Überwachungseinrichtung 18 angeordnet.

Die nach Integration erhaltenen Stromwerte Ip werden zunächst auf Höchstwerte hin überprüft. Es sollen dadurch übergroße Kollektorströme verhindert werden, die zu einer Schädigung der Leistungshalbleiter 16 führen könnten. Zu diesem Zweck werden die integrierten Strammeßwerte nach vorhergehender Gleichrichtung einem weiteren Vergleicher zugeführt, in dem sie mit einem vorgegebenen Maximalwert verglichen werden. Der Vergleicher ist in einfacher Weise wiederum ein Komparator, auf dessen einen Eingang der Strommeßwert und auf dessen anderem Eingang der vorgegebene Maximalstromwert aufgeschaltet sind. Übersteigt ein Stromsignal den vorgegebenen Maximalwert, gibt die Überwachungseinrichtung 18 ein zur sofortigen Abschaltung der Leistungshalbleiter führendes Signal ab. Typische Maximalstromwerte liegen, in Abhängigkeit von den eingesetzten Leistungshalbleitern, im Bereich von 200 - 1000 A.

Eine Überwachungsfunktion zur Erkennung eines Erdschlusses im Primärkreis wird mittels Vergleich der nach Integration erhaltenen Absolutwerte der in den einzelnen Phasen fließenden Ströme realisiert. Der Vergleich kann durch Bildung der Differenz oder durch Bildung des Quotienten mit einem vorgegebenen Sollwert erfolgen. Im störungsfreien Betrieb ändert sich der erhaltene Vergleichswert nicht, unabhängig davon, wie der Vergleich durchgeführt ist, oder er schwankt in einem engen Toleranzband um einen festen Wert.

Tritt im Primärkreis in einer Phase ein Erdschluß auf, nimmt der Strom Ip in der jeweiligen Phase stark zu, während der durch die jeweils andere Phase fließende Strom zunächst unverändert bleibt oder sogar abnimmt infolge des zur Erde hin abfließenden Stromes. Dadurch ändern sich die über die Meßspulen 20 erfaßten Strommeßwerte in ihrem Verhältnis zueinander. Dies wiederum äußerst sich am Ausgang des Vergleichers, dessen Ausgangssignal sich dann von dem vorgegebenen festen Wert unterscheidet. Durch Beobachtung des Verhältnisses der in den einzelnen Phasen fließenden Ströme zueinander läßt sich eine einfache und sichere Überwachung des Primärkreises auf Erdschluß durchführen. Die Realisierung einer Erdschlußüberwachungsschaltung erfolgt zweckmäßig ebenfalls innerhalb der Uberwachungseinrichtung 18. Nach Bildung der Differenz oder ddes Quotienten aus den Meßwerten beider Spulen 20 wird der so gewonnene Istwert mittels eines Komparators mit einer vorgegebenen Obergrenze verglichen. Übersteigt der Istwert die Obergrenze, löst die Überwachungseinrichtung mittels eines geeigneten Signals ein sofortiges Abschalten der Leistungshalbleiter 16 sowie eine Anzeige der Fehlermeldung "Erdschluß im Primärkreis" aus.

In einer weiteren vorteilhaften Ausgestaltung der erfindungsgemäßen Anordnung wird der Schweißtransformator 12 auf magnetische Sättigung hin überwacht. Folge eines in der Sättigung betriebenen Transformators ist ein stark ansteigender Strom im Primärkreis bei gleichzeitig abfallender Leistungsübertragung über den Transformator 12. Ferner entsteht eine übermäßige Erwärmung des Tranformators. Einer Transformatorsättigung ist deshalb entgegenzuwirken. Zu diesem Zweck wird jeder Puls des aus einem der Meßsignale über die Meßfühler 20 abgeleiteten Iststromsignales in einem weiteren in der Überwachungseinrichtung 18 angeordneten, ebenfalls nicht dargestellten Vergleicherglied ständig mit dem von der Steuerung 10 vorgegebenen Amplitudensollwert A verglichen. Der Sollwert liegt sinnvoll in Form eines Analogwertes am Eingang eines Komparators an, dessen anderem Eingang das integrierte Iststromsignal Iₚ aufgeschaltet ist. Das Ist-Stromsignal ist zweckmäßig gleichgerichtet, so daß die Strompulse beider Polaritäten mittels einer einzigen Überwachungseinrichtung 18 überwacht werden können.

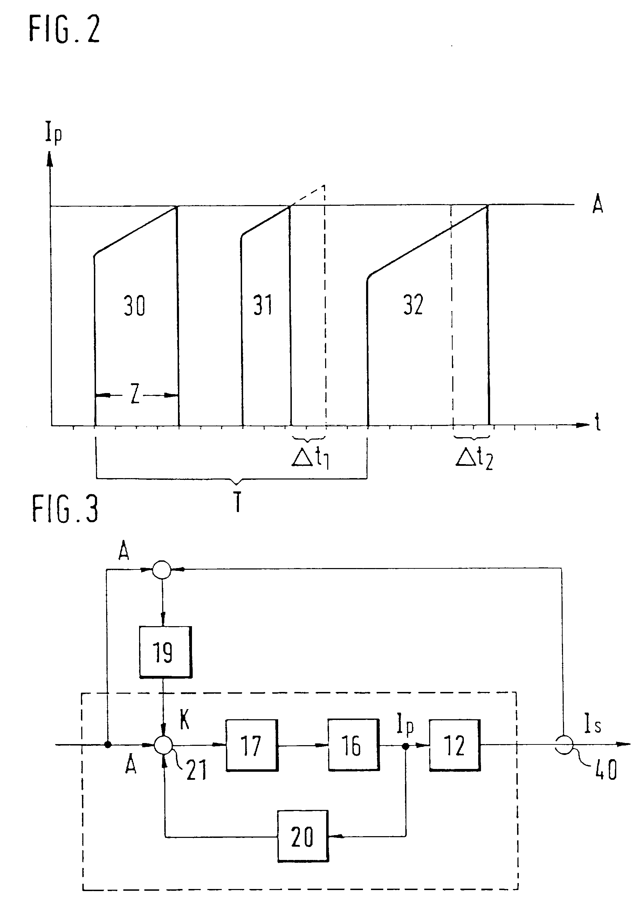

Der Sättigungsüberwachung liegt folgendes, anhand von Figur 2 erläutertes Funktionsprinzip zugrunde:

Mit einer festen Frequenz von zum Beispiel 1 kHz werden Strompulse gestartet. Im störungsfreien Betrieb kann ein Puls des Primärstroms in einem Strom-Zeit-Diagramm in guter Näherung als ein Rechteck mit zwei nahezu gleichhohen seitlichen Flanken und einer leicht stetig ansteigenden Oberseite betrachtet werden. Erreicht der Strom den vorgegebenen Sollwert, gibt die Überwachungseinrichtung ein zum Abbruch des entsprechenden Pulses führendes Signal ab. Im ideal stabilen Betrieb sind alle Pulse gleich lang, der Werkstückwiderstand ist konstant. Praktisch ist ein ideal eingeschwungener Betrieb unrealistisch. Aufgrund des nahezu immer nichtlinearen Widerstandsverhaltens des zu schweißenden Werkstücks verändert die Steuerung vielmehr ständig die Pulsweite. Kommt es dabei zu ungleichen Pulsdauern von Stromimpulsen entgegengesetzter Sättigungsverhalten des Transformators auftreten. Nähert sich der Schweißtransformator seiner magnetischen Sättigung, äußert sich dies im Strom-Zeit-Diagramm in einem charakteristischen zusätzlichen Ansteigen des Stromes innerhalb eines Pulses. Aufgrund des beschleunigten Anstiegs erreicht der Strom Ip bereits vorzeitig den vorgegebene Sollwert. Bei Erreichen des Sollwertes löst die Überwachungseinrichtung 18 durch Abgabe eines entsprechenden Signals den sofortigen Abbruch des betreffenden Pulses aus. Durch den Abbruch verkürzt sich die Dauer des Pulses um ein Zeitintervall Δt₁ gegenüber der zu erwartenden Solldauer. Dem beschleunigten Anstieg des Stromes der einen Polarität steht, als Folge und abhängig vom Grad der Sättigung, ein verlangsamter Anstieg des Stromes der entgegengesetzten Polarität gegenüber, bedingt vor allem durch eine geringere Höhe des Stromanstiegs ummittelbar nach Zünden des Pulses. Infolgedessen erreicht ein solcher Puls den vorgegebenen Sollwert erst zu einem späteren Zeitpunkt. Wiederum gibt die Überwachungseinrichtung 18 bei Erreichen des Sollwertes ein zum Abbruch des betreffenden Pulses führendes Signal ab. Durch den verlangsamten Anstieg verlängert sich die Dauer des Stromimpulses um ein Zeitintervall Δt₂.

Das Verhalten der Sättigungserkennung ist anhand beispielhafter Pulsformen in Figur 2 dargestellt. aufgetragen ist der Strom I P über der Zeitachse t. Weiter bezeichnen A den Amplitudensollwert, T in Periodendauer der Schaltfrequenz der Leistungshalbleiter, Z die Dauer eines idealen Strompulses. 31 bezeichnet einen Strompuls, der infolge Sättigungsverhaltens um Δt₁ gegenüber der Dauer Z verkürzt ist. Gestrichelt dargestellt ist ein möglicher Verlauf des Strompulses, wenn keine Begrenzung erfolgen würde. 32 bezeichnet einen infolge vorher eingetretenen Sättigungsverhaltens um Δt₂ verlängerten Strompuls. Gestrichelt dargestellt ist eine ideal zu erwartende abfallene Flanke. Die Strompulse 30 bis 32 sind gleichgerichtet dargestellt.

Aufgrund des zeitlich ungleich langen Flusses von Strömen entgegengesetzter Polarität wird der Transformator bei gleicher übertragener Leistung magnetisch symmetrisiert. Das Vorgehen wird wiederholt, bis der Transformator aus der Sättigung herausgeführt ist und die Dauer der Pulse des Primärstromsignals wieder der Sollpulsdauer entspricht.

Ein Strukturbild einer besonders vorteilhaften Anordnung zur Sättigungserkennung ist in Figur 3 dargestellt. Die gestrichelt eingefaßten Funktionsblöcke Regeleinheit 17, Leistungshalbleiter 16, Transformator 12, Meßfühler 20, sowie Summationsstelle 21 geben die vorhergehend beschriebene Struktur der Sättigungserkennurg wieder. Zusätzlich wird nun dem von der Steuerung 10 vorgegebenen analogen Amplitudensollwert A noch ein Korrektursignal K überlagert, welches das Verhalten des sekundärseitigen Stromes Is berücksichtigt. Zur Gewinnung eines geeigneten Korrektursignales K hat es sich als zweckmäßig erwiesen, einen Regelkreis vorzusehen, welcher den Sekundärstrom Is mittels eines 1-Reglers 19 auf den vorgegebenen Amplitudensollwert A ausregelt. Das erhaltene Regelkreis-Ausgangssignal K wird als Korrekturgröße dem Amplitudensollwert. A hinzuaddiert.

Die verordnung aller beschriebenen Überwachungsfunktionen erfolgt zweckmäßig innerhalb der Überwachungseinheit 18. Zur technischen Realisierung sind lediglich Standard-Bauelemente und Standard-Schaltkreise erforderlich. Die endgültige Ausführung der Schaltung liegt im Rahmen fachmännischer Routinetätigkeit, die Angabe schaltungstechnischer Details ist deshalb nicht erforderlich. Vorteilhaft können Teile der einzelnen Überwachungsfunktionen unter Zuhilfename von Softwarelösungen realisiert werden.

## Patentansprüche

1. Verfahren zur Vermeidung übergroßer Ströme in einem Schweißumrichter, der aus einem gleichgerichteten Netzwechselstrom mittels Leistungshalbleitern einen zweiphasigen pulsbreitenmodulierten Wechselstrom erzeugt, welcher der Primärseite eines Schweißtransformators zugeführt wird, gekennzeichnet durch folgende Verfahrensschritte
- die Größe des der Primärseite des Schweißtransformators (12) zugeführten pulsweitenmodulierten Wechselstromes (Iₚ) wird mittels Meßfühler (20) für jede Phase getrennt erfaßt,
- die mittels der Meßfühler (20) gemessenen Strommeßsignale beider Phasen des Primärstroms (Iₚ) werden miteinander verglichen,
- übersteigt der Unterschied zwischen den Meßsignalen beider Phasen einen vorgegebenen Höchstwert, wird ein zur Abschaltung der Leistungshalbleiter (16) führendes Signal abgegeben.
- zu wenigstens einem erfaßten strommeßsignal wird durch Differentiation nach der Zeit die Zeitableitung gebildet,
- das zeitabgeleitete Meßsignal wird mit einem vorgegebenen Maximalwert verglichen,
- übersteigt das zeitabgeleitete Meßsignal den vorgegebenen Maximalwert, wird ein zur Abschaltung der Leistungshalbleiter (16) führendes Signal abgegeben.

2. Verfahren nach Anspruch 1, dadurch gekennzeichnet, daß mittels eines Meßfühlers (20) unmittelbar die Zeitableitungen des der Primärseite des Schweißtransformators (12) zugeführten pulsweitenmodulierten Wechselstromes (Iₚ) erfaßt werden.

3. Verfahren nach Anspruch 1, dadurch gekennzeichnet, daß der Vergleich der zu den Phasen des Primärstroms (Iₚ ) gewonnenen Meßsignale in Form einer Differenzbildung erfolgt.

4. Verfahren nach Anspruch 1, dadurch gekennzeichnet, daß der Vergleich der zu den Phasen des Primärstroms (Iₚ) gewonnenen Meßsignale in Form einer Verhältnisbildung erfolgt.

5. Verfahren nach Anspruch 1 oder 2, gekennzeichnet durch folgende Verfahrensschritte,
- die Strompulse werden mit vorgegebener, fester Widerholfreguenz ausgelöst
- die mittels der Meßfühler (20) erfaßten Meßsignale werden mit einem vorgegebenen Sollwert für den Primärstrom (Iₚ) verglichen,
- erreicht das Meßsignal des aktuellen Strompulses den Sollwert, wird von der Regeleinheit (17) ein zur sofortigen Beendigung des Pulses führendes Signal erzeugt.

6. Verfahren nach Anspruch 5, dadurch gekennzeichnet, daß die von den Meßfühlern (20) erfaßten Stromsignale unterschiedlicher Polarität gleichgerichtet werden.

7. Widerstandsschweißgerät mit einer Frequenzwandlervorrichtung, enthaltend eine Gleichrichtereinheit (14), einen Gleichspannungszwischenkreis (15) sowie einen aus Leistungshalbleitern (16) aufgebauten Umrichter, welcher der Primärseite eines Schweißtrafos (12) zweiphasige pulsweitenmodulierte positive und negative Strcmpulse zuführt, einen Strom- und/oder Spannungsfühler (40) zur Erfassung des Schweißstromes und/oder der Schweißspannung, ein Steuergerät (10), welches aufgrund des erfaßten Schweißstromes den Umrichter steuert und eine Anordnung zur Erfassung des Primärstromes,
dadurch gekennzeichnet daß
jeder Phase des Primärstromes jeweils ein Meßfühler (20) zur getrennten Erfassung des in den Phasen jeweils fließenden Stromes (Iₚ) zugeordnet ist, deren Ausgangssignale einer Überwachungseinheit (18) zugeführt sind, welche eine Detektorschaltung aufweist,
wobei die Überwachungseinheit (18) die von den Meßfühlern (20) abgegebenen Signale miteinander vergleicht und die Detektorschaltung ein zur Abschaltung der Leistungshalbleiter (16) führendes Signal abgibt, wenn der Unterschied zwischen den Meßsignalen beider Phasen größer ist als ein vorgegebenen Höchstwert,
und wobei die Überwachungseinheit zu den von den Meßfühlern (20) abgegebenen Signalen weiterhin die Zeitableitung bildet, diese mittels einer Vergleichereinrichtung mit einem vorgegebenen Höchstwert vergleicht, und die Detektorschaltung ein zur Abschaltung der Leistungshalbleiter (16) führendes Signal abgibt, wenn der Wert der Zeitableitung des Meßsignals größer ist als der vorgegebene Höchstwert.

8. Anordnung nach Anspruch 6, dadurch gekennzeichnet, daß der Strom-Meßfühler (20) direkt das Zeitverhalten in Form der Zeitableitungen des jeweils in beiden Phasen fließenden Stromes (Iₚ) erfaßt.

9. Anordnung nach Anpruch 7, dadurch gekennzeichnet, daß der Meßfühler (20) eine Toroidspule ist.

10. Anordnung nach einem der Ansprüche 7 bis 9, dadurch gekennzeichnet, daß in der Überwachungseinheit (18) eine Integzationsstufe zur Integration der zeitabgeleiteten Strom-Meßsignale der Meßfühler (20) vorgesehen ist, deren Ausgangssignale dem absoluten Betrag des Stroms (Iₚ) äquivalent sind, welcher ein Vergleicher nachgeschaltet ist, der das dem gemessener Strom (Iₚ) äquivalente Signal mit einem vorgegebenen Sollwert vergleicht, und der den das Meßsignal liefernden Strompuls abbricht, wenn der Stromwert größer oder gleich dem vorgegebenen Sollwert ist.

## Claims

1. Method for preventing excessively large currents in a welding converter which by means of power semiconductors generates from a rectified AC supply a two-phase pulse-width-modulated alternating current which is fed to the primary side of a welding transformer, characterized by the following method steps:
- the magnitude of the pulse-width-modulated alternating current (Iₚ) fed to the primary side of the welding transformer (12) is detected separately for each phase by means of sensors (20),
- the current measurement signals, measured by means of the sensors (20), of the two phases of the primary current (Iₚ) are compared with one another,
- if the difference between the measurement signals of the two phases exceeds a prescribed maximum value, a signal which leads to turning off the power semiconductors (16) is issued,
- the time derivative is formed for at least one detected current measurement signal by differentiation with respect to time,
- the measurement signal differentiated with respect to time is compared with a prescribed maximum value, and
- if the measurement signal differentiated with respect to time exceeds the prescribed maximum value, a signal which leads to turning off the power semiconductors (16) is issued.

2. Method according to Claim 1, characterized in that the time derivatives of the pulse-width-modulated alternating current (Iₚ) fed to the primary side of the welding transformer (12) are directly detected by means of a sensor (20).

3. Method according to Claim 1, characterized in that the comparison of the measurement signals obtained for the phases of the primary current (Iₚ) is carried out by forming a difference.

4. Method according to Claim 1, characterized in that the comparison of the measurement signals obtained for the phases of the primary current (Iₚ) is carried out by forming a ratio.

5. Method according to Claim 1 or 2, characterized by the following method steps,
- the current pulses are triggered with a prescribed, fixed repetition frequency,
- the measurement signals detected by means of the sensors (20) are compared with a prescribed desired value for the primary current (Iₚ),
- if the measurement signal of the actual current pulse reaches the desired value, the control unit (17) generates a signal which leads to immediate termination of the pulse.

6. Method according to Claim 5, characterized in that the current signals of different polarity which are detected by the sensors (20) are rectified.

7. Resistence welding apparatus having a frequency converter, containing a rectifier unit (14), a DC link (15) as well as a converter which is constructed from power semiconductors (16) and feeds two-phase pulse-width-modulated positive and negative current pulses to the primary side of a welding transformer (12), a current and/or voltage sensor (14) for detecting the welding current and/or the welding voltage, a control device (10) which controls the converter on the basis of the detected welding current, and an arrangement for detecting the primary current, characterized in that each phase of the primary current is respectively assigned a sensor (20) for separate detection of the current (Ip) respectively flowing in the phases, the output signals of which are fed to a monitoring unit (18) which has a detector circuit, the monitoring unit (18) comparing the signals issued by the sensors (20) and the detector circuits issuing a signal leading to turning off the power semiconductors (16) if the difference between the measurement signals of the two phases is greater than a prescribed maximum value, and the monitoring unit furthermore forming the time derivative of the signals issued by the sensors (20) and comparing said time derivatives with a prescribed maximum value by means of a comparator device, and the detector circuit issuing a signal leading to turning off the power semiconductors (16) when the value of the time derivative of the measurement signal is greater than the prescribed maximum value.

8. Arrangement according to Claim 6, characterized in that the current sensor (20) directly detects the time response in the form of time derivatives of the current (Iₚ) respectively flowing in the two phases.

9. Arrangement according to Claim 7, characterized in that the sensor (20) is a toroidal coil.

10. Arrangement according to one of Claims 7 to 9, characterized in that there is provided in the monitoring unit (16) an integration stage for integrating the current measurement signal, differentiated with respect to time, of the sensor (20), the output signals of which are equivalent to the absolute value of the current (Iₚ), downstream of which integration stage there is connected a comparator which compares the signal which is equivalent to the measured current (Iₚ) to a prescribed desired value and which terminates the current pulse supplying the measurement signal when the current value is greater than or equal to the prescribed desired value.

## Revendications

1. Procédé pour éviter des surintensités dans un convertisseur de soudage créant, à partir d'un courant alternatif de réseau, redressé, à l'aide de semi-conducteurs de puissance, un courant alternatif biphasé, à modulation de largeur d'impulsion, pour être appliqué au primaire d'un transformateur de soudage, caractérisé par les étapes de procédé suivantes :
- on détecte séparément pour chaque phase l'amplitude du courant alternatif (Ip) à modulation de largeur d'impulsion appliquée au primaire du transformateur de soudage (12) en utilisant des capteurs de mesure (20),
- les signaux de mesure de l'intensité mesurée par les capteurs (20) pour les deux phases du courant primaire (Ip) sont comparés,
- lorsque la différence entre les signaux de mesure des deux phases dépasse une valeur maximale prédéterminée, on émet un signal conduisant à la coupure des semi-conducteurs de puissance (16),
- on forme la dérivée en fonction du temps d'au moins un signal de mesure de courant détecté en différenciant par rapport au temps ;
- la dérivée du signal de mesure par rapport au temps est comparée à une valeur maximale prédéterminée,
- lorsque le signal de mesure sous forme de dérivée en fonction du temps dépasse la valeur maximale prédéterminée, on émet un signal conduisant à la coupure du semiconducteur de puissance 16.

2. Procédé selon la revendication 1, caractérisé en ce qu'à l'aide d'un capteur de mesure (20) on détecte directement les dérivées en fonction du temps du courant alternatif (Ip) à modulation de largeur d'impulsion appliqué au primaire du transformateur de soudage (12).

3. Procédé selon la revendication 1, caractérisé en ce qu'on compare les signaux de mesure obtenus pour les phases du courant primaire (Ip) sous la forme d'une différence.

4. Procédé selon la revendication 1, caractérisé en ce qu'on compare les signaux de mesure obtenus pour les phases du courant primaire (Ip) sous la forme d'un rapport.

5. Procédé selon la revendication 1 ou 2, caractérisé par les étapes de procédure suivantes :
- on déclenche les impulsions de courant selon une fréquence de répétition fixe, prédéterminée,
- les signaux de mesure détectés par les capteurs de mesure (20) sont comparés à une valeur de consigne prédéterminée du courant primaire (Ip),
- lorsque le signal de mesure de l'impulsion de courant réelle atteint la valeur de consigne, l'unité de régulation (17) crée un signal conduisant à la fin immédiate de l'impulsion.

6. Procédé selon la revendication 5, caractérisé en ce que les signaux de courant détectés par les capteurs de mesure (20) et correspondant à des polarités différentes sont redressés.

7. Appareil de soudage par résistance comportant un convertisseur de fréquence comprenant un élément redresseur (14), un circuit intermédiaire à tension continue (15) ainsi qu'un convertisseur formé de semi-conducteurs de puissance (16), qui fournit au primaire d'un transformateur de soudage (12), des impulsions de courant, biphasées, positives et négatives à modulation de largeur d'impulsion, un capteur de tension et/ou d'intensité (40) pour détecter le courant de soudage et/ou la tension de soudage, un appareil de commande (10) qui commande le convertisseur sur la base du courant de soudage détecté et un dispositif pour détecter le courant primaire, caractérisé en ce qu'à chaque phase du courant primaire est associé chaque fois un capteur de mesure (20) pour une détection séparée du courant (Ip) passant par les phases et dont les signaux de sortie sont appliqués à une unité de surveillance (18) comportant un circuit détecteur, l'unité de surveillance (18) comparant entre eux les signaux fournis par les capteurs de mesure (20) et le circuit de détection fournit un signal produisant la coupure des semi-conducteurs de puissance (16), lorsque la différence entre les signaux de mesure des deux phases est supérieure à une valeur maximale prédéterminée, et l'unité de surveillance forme pour les signaux fournis par les capteurs de mesure (20), la dérivée en fonction du temps et compare celle-ci dans une installation de comparaison à une valeur maximale prédéterminée et le circuit de détection émet un signal conduisant à la coupure des semi-conducteurs de puissance (16) lorsque la valeur de la dérivée en fonction du temps du signal de mesure est supérieure à une valeur maximale prédéterminée.

8. Dispositif selon la revendication 6, caractérisé en ce que le capteur de mesure de courant (20) détecte directement le comportement dans le temps sous la forme de dérivée dans le temps du courant (Ip) traversant chaque fois les deux phases.

9. Dispositif selon la revendication 7, caractérisé en ce que le capteur de mesure (20) est une bobine toroïdale.

10. Dispositif selon l'une des revendications 7 à 9, caractérisé par un étage d'intégration prévu dans l'unité de surveillance (18) pour intégrer les signaux de mesure de courant dérivés dans le temps fournis par le capteur de mesure (20) dont les signaux de sortie sont équivalents à la valeur absolue du courant (Ip), suivis d'un comparateur comparant le signal équivalent au courant mesuré (Ip) et une valeur de consigne prédéterminée, et qui coupent l'impulsion de courant fournissant le signal de mesure si la valeur de l'intensité dépasse ou est égale à la valeur de consigne prédéterminée.
